# EUROPÄISCHE PATENTSCHRIFT

(11) **EP 0 350 585 B1**
(45) Veröffentlichungstag und Bekanntmachung des Hinweises auf die Patenterteilung: **14.04.1993**
(21) Anmeldenummer: 89108073.1
(22) Anmeldetag: 04.05.1989
(51) Int. Cl.: F16D 35/00

(54) **Flüssigkeitsreibungskupplung, insbesondere für den Antrieb eines Lüfters zur Kühlung von Kraftfahrzeugmotoren**
Fluid friction coupling, especially for motor vehicle cooling fan drives
Accouplement à frottement visqueux, notamment pour l'entrainement d'un ventilateur d'automobile

(30) Priorität: 14.07.1988 DE 3823871
(43) Veröffentlichungstag der Anmeldung: 17.01.1990
(73) Patentinhaber: Behr GmbH & Co., D-70469 Stuttgart (DE)
(72) Erfinder: Nieft, Uwe, D-7000 Stuttgart 60 (DE); Hummel, Werner, D-7151 Affalterbach (DE); Hauser, Kurt, Dipl.-Ing., D-7000 Stuttgart 30 (DE)
(74) Vertreter: Wilhelm, Hans-Herbert, Dr.-Ing.

(56) Entgegenhaltungen:
- DE-U- 8 233 338
- US-A- 4 687 132
- PATENT ABSTRACTS OF JAPAN, Band 10, Nr. 307 (M-527)[2363], 18. Oktober 1986;& JP-A-61 119 825 (AISIN SEIKI CO., LTD) 07-06-1986

## Beschreibung

Die Erfindung betrifft eine Flüssigkeitsreibungskupplung, insbesondere für den Antrieb eines Lüfters zur Kühlung von Kraftfahrzeugmotoren nach dem Oberbegriff des Patentanspruches 1.

Flüssigkeitsreibungskupplungen dieser Art mit einer zumindest teilweise modulierenden Regelcharakteristik, bei der eine kontinuierliche Drehzahlerhöhung über ein von der Kühllufttemperatur beeinflusstes Bimetall und damit auch eine kontinuierliche Steigerung der Kühlwirkung erreicht wird, sind beispielsweise aus der DE-C-37 19 279 oder, in einer anderen Ausführung, auch aus dem Gebrauchsmuster 83 23 498 bekannt. Flüssigkeitsreibungskupplungen dieser Art weisen den Vorteil auf, daß wegen der modulierenden Regelung auch eine bessere Temperaturregelung für das Kühlwasser der Motoren erreicht werden kann.

Werden solche Flüssigkeitsreibungskupplungen für die Kühlung von Motoren eingesetzt, die beispielsweise an Nutzfahrzeugen mit sogenannten Retardern angeordnet sind, dann ergibt sich beim Einsatz des Retarders eine momentane Temperaturerhöhung, die aber wegen der Trägheit der erst auf den Luftstrom hinter dem Kühler ansprechenden Temperaturerfassung erst sehr spät ausgeglichen werden kann. Kühllufttemperaturgesteuerte Flüssigkeitsreibungskupplungen sind nicht in der Lage, solche kurzzeitigen Temperaturerhöhungen des Motorkühlwassers schnell auszugleichen.

Es sind zwar auch Flüssigkeitsreibungskupplungen bekannt, bei denen eine von außen gesteuerte zusätzliche Beheizung eines den Scherflüssigkeitszufluß steuernden Bimetalles ermöglicht wird (EP 55 853 B1). Auch eine solche wiederum temperaturabhängige Beeinflussung des Bimetalles kann aber wegen der dem System innewohnenden Trägheit, nicht zur schnellen Reaktion auf momentane Temperaturerhöhungen eingesetzt werden.

Bekannt ist es zwar auch, die Scherflüssigkeitszufuhr zur Arbeitskammer bei Flüssigkeitsreibungskupplungen nicht temperaturabhängig, sondern über einen Schrittmotor (DE-U-83 26 486), durch Druckluft (DE-U-81 26 744) oder auch durch einen Elektromagnet (DE-U-82 33 338) zu steuern. Die Ansteuerung solcher Flüssigkeitsreibungskupplungen läßt sich aber nicht oder nur mit sehr großem Aufwand so auslegen, daß eine modulierende, temperaturabhängig die Lüftungsleistung erhöhende Kupplung entsteht, die sich für den Betrieb, insbesondere von wassergekühlten Kraftfahrzeugmotoren als besonders vorteilhaft erwiesen hat.

Der vorliegenden Erfindung liegt daher die Aufgabe zugrunde, eine Flüssigkeitsreibungskupplung der eingangs genannten Gattung so auszubilden, daß sie unter Beibehaltung ihrer systembedingten Vorteile dennoch die Möglichkeit zu einer schnellen Reaktion auf momentane Temperaturerhöhungen bietet. Zur Lösung dieser Aufgabe werden bei einer Flüssigkeitsreibungskupplung der eingangs genanten Art die kennzeichnenden Merkmale des Patentanspruches 1 vorgesehen. Der temperaturabhängigen Kupplungsdrehzahlsteuerung wird daher eine schnell ansprechende, beispielsweise unmittelbar vom Einschaltvorgang des Retarders mit ausgelöste Elektromagnetsteuerung zugeordnet, die zusätzlich und unabhängig von der weiter wirkenden Temperatursteuerung die momentane Scherflüssigkeitsmenge in der Arbeitskammer erhöht und so für schlagartige Erhöhungen der Lüfterdrehzahl sorgen kann.

Durch die Erfindung wird es auch möglich, die Zuschaltung der Kupplung erst bei einer höheren Temperatur als üblich vorzunehmen, weil die erforderliche Kühlleistung sehr schnell durch Zuschaltung der Elektromagnetsteuerung erreichbar ist. Es wird daher auch nicht notwendig, einen Sicherheitsabschlag von der nicht zu überschreitenden Endtemperatur vorzunehmen. Die temperaturabhängig gesteuerte Einschaltdauer der Kupplung wird daher gegenüber Kupplungen üblicher Bauart kürzer. Es wird mit der Erfindung auch möglich, die Steuerung abhängig von beliebigen Parametern, (zum Beispiel abhängig von einer Ladelufttemperatur) vorzunehmen.

Eine vorteilhafte Realisationsmöglichkeit ist im Anspruch 2 gekennzeichnet. Die Anordnung einer zweiten, zusätzlichen Vorratskammer, von der aus unabhängig der Scherflüssigkeitszufluß zur Arbeitskammer steuerbar ist, läßt schnelle und wirksame Reaktionen zu. Die Merkmale des Anspruches 4 verhindern dabei im Zusammenhang mit einer genau dosierten Gesamtölmenge, daß sich in jeder der beiden Vorratskammern zu viel Scherflüssigkeit sammelt. Sammelt sich nämlich in der zweiten Vorratskammer zu viel Scherflüssigkeit, dann würde die temperaturgesteuerte Schaltcharakteristik zu sehr verfälscht. Sammelt sich in der ersten Vorratskammer zu viel Scherflüssigkeit, dann wäre die Wirkungsweise der elektromagnetischen Zusatzsteuerung in Frage gestellt.

Die Merkmale der Ansprüche 5 und 12 umreißen andere Möglichkeiten der Realisierung der neuen Flüssigkeitsreibungskupplung, bei denen kein zusätzlicher Raum für eine Vorratskammer benötigt wird. Die Unteransprüche 6 bis 11 bzw. 13 bis 16 stellen vorteilhafte Ausgestaltungsmöglichkeiten dieser Ausführungsformen dar.

In der Zeichnung sind Ausführungsformen einer erfindungsgemäßen Flüssigkeitsreibungskupplung dargestellt, die im folgenden beschrieben werden. Es zeigen:
- Fig. 1: eine schematischen Längsschnitt durch eine erste Ausführungsform einer erfindungsgemäßen Flüssigkeitsreibungskupplung,
- Fig 2: die Ansicht der bei der Kupplung der Fig. 1 als Anker verwendeten Ringscheibe in Richtung des Pfeiles II gesehen,
- Fig 3: den schematischen Längsschnitt durch einen Teil einer anderen Ausführungsform einer erfindungsgemäßen Flüssigkeitsreibungskupplung, wobei auf die Darstellung der Arbeitskammer und der sich darin befindenden Kupplungsscheibe mit An- und Abtrieb verzichtet wurde,
- Fig 4: den schematischen Längsschnitt durch einen Teil einer weiteren Ausführungsform der Erfindung,
- Fig 5: eine schematische diagrammartige Darstellung einer mit einer erfindungsgemäßen Kupplung gemäß den Fig. 1, 3 und 4 zu erzielenden Regelcharakteristik,
- Fig 6: die Darstellung ähnlich Fig. 5 einer Regelcharakteristik einer Kupplung ohne die erfindungsgemäße Zusatzsteuereinrichtung und
- Fig 7: die analog zu Fig. 6 gewählte Darstellung der Regelcharakteristik einer Kupplung mit der erfindungsgemäßen Zusatzsteuereinrichtung, aber ansonsten gleicher Bauweise wie die Kupplung, deren Charakteristik in Fig. 6 gezeigt ist.

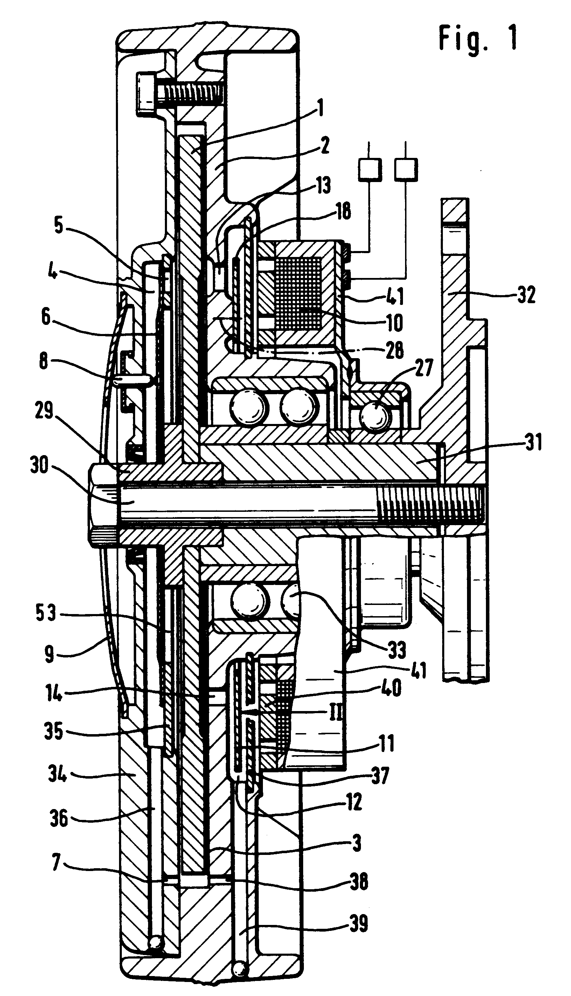

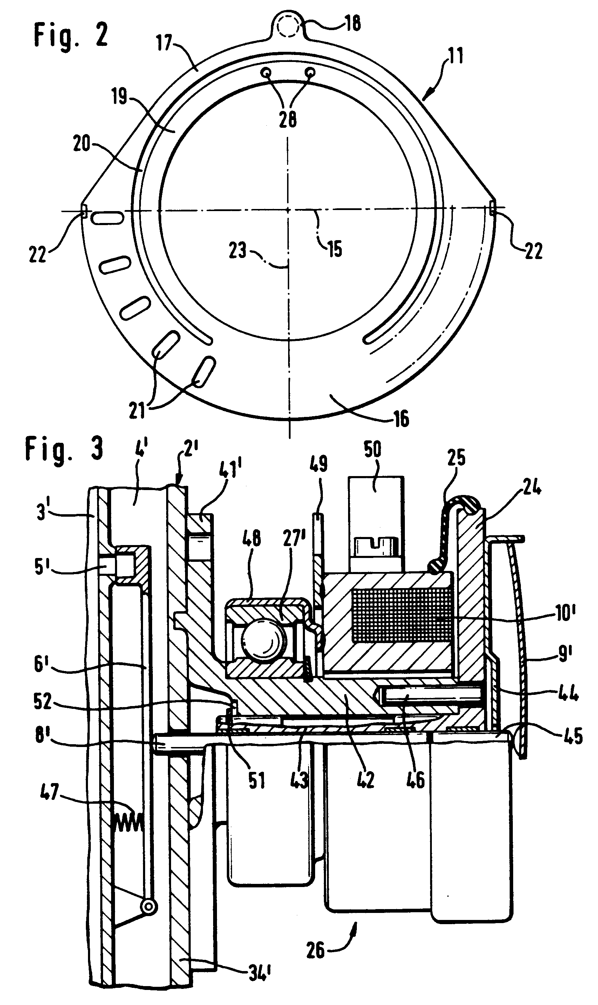

Die Fig. 1 und 2 zeigen eine Flüssigkeitsreibungskupplung, bei der in an sich bekannter Weise in einer in einem Gehäuse (2) angeordneten Arbeitskammer (3) eine Kupplungsscheibe (1) mit engem Spalt umläuft. Die Kupplungsscheibe (1) ist bei der dargestellten Ausführungsform mit einer Nabe (29) verbunden, die ihrerseits drehfest mit Hilfe eines zentralen Schraubbolzens (30) mit einer Hülse (31) verbunden ist, die mit einem Flansch (32) in Verbindung steht, der an einem getriebenen Teil des Motors anbringbar ist. Es wäre auch möglich, die Kupplung mit Hilfe des Schraubbolzens (30) unmittelbar mit einem drehenden Teil des Motors, beispielsweise mit der Kurbelwelle zu verbinden. Bei der dargestellten Ausführungsform ist daher die Kupplungsscheibe (1) das angetriebene Teil.

Drehbar auf der Hülse (31) sitzt ein Kupplungsgehäuse (2), das mit dem Lager (33) gegenüber der Hülse (31) abgestützt ist. Das Gehäuse (2) ist in nicht näher dargestellter Weise außen mit Lüfterflügeln versehen. Die Kupplung dient daher zum Antrieb eines Kühllüfters für einen Fahrzeugmotor. Das Gehäuse (2) ist beim Ausführungsbeispiel der von der Kupplungsscheibe (1) getriebene Teil. Es wäre auch möglich, bei entsprechender Änderung der Konstruktion das Gehäuse (2) anzutreiben und die Kupplungsscheibe als getriebenes Teil vorzusehen.

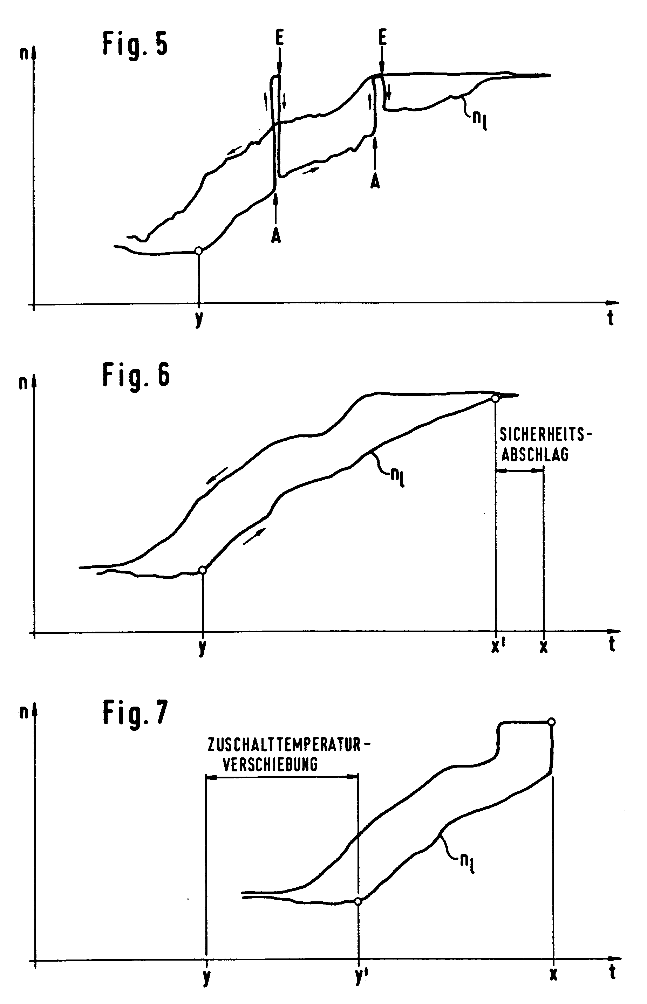

Das Gehäuse (2) ist auf der Vorderseite mit Hilfe eines Deckels (34) abgeschlossen, an dem ein Bimetall (9) eingespannt ist, das auf einen Schaltstift (8) drückt, der abgedichtet durch den Deckel (34) hindurchgeführt ist. Zwischen dem Deckel (34) und einer in das Gehäuse (2) eingesetzten Trennwand (35) ist eine Vorratskammer (4) für Scherflüssigkeit, insbesondere Silikonöl gebildet, das durch eine Zuflußöffnung (5) durch die Trennwand (35) hindurch in die Arbeitskammer (3) eintreten kann. Um den Zufluß der Scherflüssigkeit zu steuern, wird die Zuflußöffnung (5), die in der gezeigten Lage verschlossen ist, von einem Ventilhebel (6) freigegeben, der unter Federwirkung gegen den Schaltstift (8) drückt und daher die Zuflußöffnung (5) öffnet, sobald sich das Bimetall (9) bei Erhöhung der Temperatur nach außen, d.h. vom Deckel (34) weg biegt. Je nach Füllstand der Arbeitskammer (3) nimmt daher die vom Motor angetriebene Kupplungsscheibe (1) das Gehäuse (2) mit und sorgt dabei dafür, daß sich die Drehzahl des mit dem Gehäuse (2) verbundenen Lüfters erhöht. Es kann auf diese Weise eine Regelcharakteristik gemäß Fig. 5 erreicht werden, bei der die Lüfterdrehzahl (n_{L}) von einem Einschaltpunkt bei einer bestimmten Temperatur (y) ab sich bis auf einen Maximalwert erhöht und dann, wenn die Scherflüssigkeit aus der Arbeitskammer (3) wieder abgezogen wird, sich längs des oberen Astes der Hysteresekurve der Fig. 5 wieder absenkt.

Bei der Flüssigkeitsreibungskupplung der Fig. 1 ist, um die Rückführung von Scherflüssigkeit aus der Arbeitskammer (3) zu erreichen, in an sich bekannter Weise eine Rückflußöffnung (7) im äußersten Bereich der Arbeitskammer (3) vorgesehen, durch welche die Scherflüssigkeit aufgrund der Relativdrehzahl der Kupplungsscheibe (1) und des Gehäuses (2) aufgrund des Staudruckes an einer Staueinrichtung in einen Kanal (36) und von dort in die Vorratskammer (4) zurückgefördert wird.

Wie aus den Fig. 1 und 2 aber zu entnehmen ist, ist diese an sich in bekannter Weise ausgestattete Flüssigkeitsreibungskupplung zusätzlich noch mit einer zusätzlichen Vorratskammer (12) auf der von der Vorratskammer (4) abgewandten Seite der Kupplungsscheibe (1) versehen. Diese Vorratskammer ist in das Gehäuse (2) integriert und wird nach außen durch eine Abdeckscheibe (37) abgedichtet. In dieser zusätzlichen Vorratskammer (12) für Scherflüssigkeit, die ähnlich wie die Vorratskammer (4) über eine im äußersten Bereich der Arbeitskammer (3) liegenden Staueinrichtung mit Rückströmöffnung (38) und einen Rückführkanal (39) mit der Scherflüssigkeit versorgt wird, ist eine Ringscheibe (11) angeordnet, deren Aufbau bekannt ist und aus Fig. 2 hervorgeht. Die Ringscheibe (11) ist an zwei Befestigungsstellen (28) fest mit dem Gehäuse (2) verbunden. Diese beiden Befestigungsstellen (28) sind dabei in einem Ringteil (19) der Ringscheibe (11) angeordnet, der von einem weiter außen liegenden, schmalen Bogen (17) durch einen Spalt (20) getrennt ist, der kreisbogenförmig über einen Winkel von etwa 270° verläuft und dadurch den Bogen (17) von dem Ringteil (19) trennt. Die Ringscheibe (11) ist unten mit einer im Vergleich zum Bogen (17) sehr breit ausgebildeten Ankerscheibenhälfte (16) versehen, die mit mehreren Öffnungen (21) ausgerüstet ist. Diametral an der Ringscheibe (11) gegenüber sind zwei Ausprägungen (22) vorgesehen, die sich in nicht näher dargestellter Weise am Gehäuse (2) abstützen und dadurch eine Schwenkachse (15) bilden, um die die Ringscheibe (11) kippen kann. An dem Bogenteil (17) ist ein Fortsatz (18) angeordnet. Die Auslegung ist dabei so getroffen, daß dieser Fortsatz (18) einer Zuflußöffnung (13) in dem Gehäuse (2) gegenüberliegt, die in die Arbeitskammer (3) mündet. In der in der Fig. 1 dargestellten Lage ist diese Zuflußöffnung (13) geöffnet. Sie schließt sich, wenn die Ringscheibe (11) um ihre Schwenkachse (15) kippt und dabei den Fortsatz (18) auf die Öffnung (13) bringt. Diese Kippbewegung ist trotz der Befestigung an der Stelle (28) möglich, weil der Bogen (17) und der Ankerscheibenteil (16) durch den Schlitz (20) unabhängig von dem inneren Ringteil (19) sind, der nur die Lagesicherung innerhalb des Gehäuses bzw. innerhalb der zusätzlichen Vorratskammer (12) übernimmt.

Bewirkt wird diese Kippbewegung um die Schwenkachse (15) durch eine Elektromagnetspule (10), die außen angrenzend an die Vorratskammer (12) ringförmig angeordnet ist und so ausgelegt sein kann, daß bei Strombeaufschlagung die Ringscheibe (11) aus der in der Fig. 1 dargestellten Lage mit ihrem breit ausgebildeten Ankerscheibenteil (16) in Richtung auf die Magnetschuhe (40) der Spule (10) gezogen wird, wobei sie um die Schwenkachse (15) kippt.

Zwischen der zusätzlichen Vorratskammer (12) und der Arbeitskammer (3) ist in einer Gehäusewand eine Überströmöffnung (14) vorgesehen, die auf einem kleineren Radius als die Zuflußöffnung (13) liegt. Eine ähnliche Überströmmöglichkeit ist in Form eines Ringspaltes (53) in der Trennwand zwischen der ersten Vorratskammer (4) und der Arbeitskammer (3) vorgesehen. Beide Überströmöffnungen verhindern, daß sich in den Vorratskammern zuviel Scherflüssigkeit sammelt.

Bei der gezeigten Ausführung ist der Abschlußdeckel (37) zweckmäßig aus unmagnetischem Material hergestellt. Die Elektromagnetspule (10) selbst wird an einem Ring (41) befestigt, der ortsfest gehalten ist und der sich über das Wälzlager (27) auf der Hülse (31) abstützt.

Mit Hilfe der zusätzlichen Vorratskammer (12), der Elektromagnetspule (10) und der als Anker wirkenden Ringscheibe (11) wird es daher bei Bedarf möglich, unabhängig von der temperaturabhängigen Steuerung der Kupplung zusätzlich Scherflüssigkeit in die Arbeitskammer (3) zu fördern. Dies kann beispielsweise bei Kühllüftern der Fall sein, die bei Fahrzeugen eingesetzt werden, die mit Retardern arbeiten. Beim Einschalten des Retarders ergibt sich eine schlagartige Temperaturerhöhung des Kühlwassers, die über das Bimetall (9), das in den hinter dem Kühler für das Wasser liegenden Luftstrom angeordnet ist, nur sehr spät und sehr träge erfaßt werden und zu einer Drehzahlerhöhung des Lüfters ausgenutzt werden könnte. Durch die neue Lösung wird es aber möglich, bei der Einschaltung eines Retarders auch die zusätzliche elektromagnetische Steuerung einzuschalten, so daß schon zu einem Zeitpunkt, wo am Bimetall (9) noch gar keine Temperaturerhöhung erfaßt werden kann, die Drehzahl des Lüfters für die zu erwartende Temperatursteigerung des Kühlwassers erhöht werden kann. Eine wesentlich ausgeglichenere Temperaturregelung des Kühlwassers wird dadurch ermöglicht.

Die Fig. 5 zeigt beispielhaft die mit der Erfindung zu erzielenden Effekte. Hier wird davon ausgegangen, daß die Lüfterdrehzahl (n_{L}), die zunächst die Größe der Leerlaufdrehzahl hat, bei einem bestimmten Einschaltpunkt (y), der einer bestimmten vorgegebenen Kühllufttemperatur (hinter dem Kühler) entspricht, erhöht wird. Dabei erhöht sich die Drehzahl der Kupplung und damit des Lüfters längs des unteren Astes der in Fig. 5 gezeigten Hysteresekurve.

Am Punkt (A) sei nun beispielsweise zusätzlich ein Retarder eingeschaltet. Diese Einschaltung führt dazu, daß aus der zusätzlichen Vorratskammer (12) schlagartig Scherflüssigkeit in die Arbeitskammer geführt wird, so daß sich auch die Drehzahl des Kupplungsgehäuses (2) und damit die Lüfterdrehzahl schlagartig erhöht. Wird die retarderabhängige Kühlleistung nicht mehr benötigt, so fällt die Lüfterdrehzahl nach Abschalten des Elektromagneten im Punkt (E) auf den durch die Kühllufttemperatur vorgegebenen Wert zurück. Die Kupplung arbeitet dann wieder wie bekannte, temperaturgesteuerte Kupplungen in der modulierenden Weise ausschließlich temperaturgesteuert weiter. Wird zu einem späteren Zeitpunkt erneut der Retarder eingeschaltet, so ergibt sich wieder eine Lüfterdrehzahlerhöhung, verbunden mit einer Kühlleistungserhöhung. Aus der Fig. 5 wird daher ersichtlich, daß je nach Bedarf zusätzlich zur kühlluftabhängigen Kupplungsregelung eine Drehzahlerhöhung durch Steuerung des Elektromagneten (10) erreicht werden kann, die ausgenützt werden kann, um sonst auftretende Temperaturerhöhungen zu vermeiden.

In der Fig. 3 ist eine andere Ausführungsform einer erfindungsgemäßen Flüssigkeitsreibungskupplung gezeigt, bei der kein zusätzlicher Vorratsraum für Kupplungsflüssigkeit von Nöten ist. Wie Fig. 3 entnommen werden kann, ist dort auf den Deckel (34′) des ansonsten nur angedeuteten Kupplungsgehäuses (2′) ein Flansch (41′) aufgesetzt, der einen Führungszapfen (42) trägt, in dem axial verschiebbar eine Hülse (43) angeordnet ist, die beim Ausführungsbeispiel einteilig mit einer am rechten Ende der Hülse (43) angeordneten Ankerscheibe (24) ausgebildet ist. Auf der Ankerscheibe (24) ist eine Halterung (44) für ein Bimetall (9′) befestigt, das an einem Ausgleichsstift (45) anliegt, der seinerseits stirnseitig an einem Schaltstift (8′) anliegt, der innerhalb der Hülse (43) axial verschiebbar verläuft. Die Ankerscheibe (24) ist gegen Drehung durch einen Stift (46) gegenüber dem Führungszapfen (42) gesichert und sie liegt in der in der Fig. 3 gezeigten Lage an der rechten Stirnseite des Führungszapfens (42) an. Der Schaltstift (8') drückt in an sich bekannter Weise auf einen Ventilhebel (6'), der durch eine Feder (47) im Uhrzeigersinn belastet ist und in der dargestellten Lage eine Zuflußöffnung (5') verschließt, die, wie beim Ausführungsbeispiel der Fig. 1, von der Vorratskammer (4') in die Arbeitskammer (3') der Flüssigkeitsreibungskupplung führt. Bei Temperaturerhöhung biegt sich, ebenso wie beim Beispiel der Fig. 1, das Bimetall (9') durch. Die Feder (47) drückt daher den Ventilhebel (6') gegen den Schaltstift (8'), der nach rechts ausweichen kann. Die Zuflußöffnung (5') wird freigegeben. Auch die in der Fig. 3 dargestellte Flüssigkeitsreibungskupplung arbeitet daher mit einer Kennlinie, die, soweit die Temperatursteuerung betrachtet wird, jener der Fig. 6 entspricht.

Der Ankerscheibe (24) zugeordnet ist jedoch eine Elektromagnetspule (10'), die über einen Führungsring (48) und eine Wälzlagerung (27') drehbar an dem Führungszapfen (42) gelagert ist. Die Elektromagnetspule (10') wird mit Hilfe einer Halterung (50) ortsfest gehalten. Der Stromanschluß (49) kann daher an einer nicht drehbaren Anschlußstelle erfolgen. Zwischen der Außenseite der Elektromagnetspule (10') und der Ankerscheibe (24) ist eine Dichtmembran (25) angeordnet, die eine Verschmutzung verhindert. Die Lagerung der Elektromagnetspule (10'), die Ankerscheibe (24) mit Bimetall (9') und der Schaltstift (8') sind Teile einer vormontierten, auf den Deckel des Kupplungsgehäuses (2') aufsetzbaren Baueinheit.

Durch diese Ausgestaltung wird es möglich, der Temperatursteuerung mit Hilfe des Bimetalls (9') eine Steuerung mit Hilfe des Elektromagneten (10') zu überlagern. Wird nämlich die Elektromagnetspule (10'), die in der dargestellten Lage strombeaufschlagt ist und daher die Ankerscheibe (24) anzieht, stromlos, so wird die Ankerscheibe (24) von der Kraft der Feder (47), die entsprechend ausgelegt werden kann, zusammen mit dem Schaltstift (8') nach rechts geschoben, bis ein Anschlagring (51), der an der Hülse (43) der Ankerscheibe (24) vorgesehen ist, an einem Gegenanschlag (52) des Führungszapfens (42) zur Anlage kommt. Durch diese Verschiebung der gesamten Bimetallsteuerung öffnet sich der Ventilhebel (6′) und gibt die Zufuhr von Scherflüssigkeit in die Arbeitskammer (3′) schlagartig frei, ohne daß die Steuerlage des Bimetalls (9′) dadurch beeinflußt würde. Auch mit einer solchen Ausgestaltung können daher die Drehzahlimpulse der Fig. 5 erreicht werden. Hier allerdings dann, wenn die Magnetspule (10′) stromlos wird. Selbstverständlich wäre auch eine andere Bauart denkbar, bei der die Impulse bei Strombeaufschlagung erfolgen.

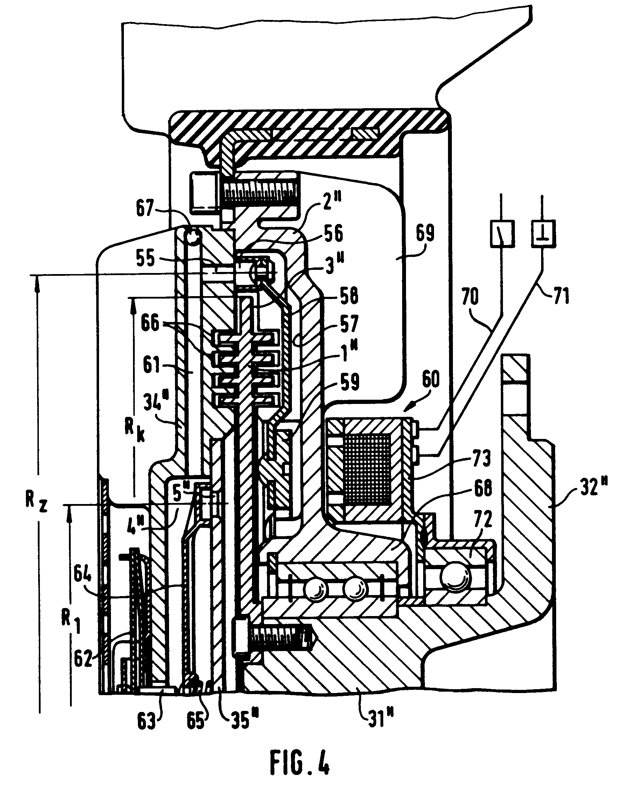

In der Fig. 4 ist eine weitere Ausführungsform einer erfindungsgemäßen Flüssigkeitsreibungskupplung gezeigt, bei der, wie bei der Ausführungsform der Fig. 3, keine zusätzliche Vorratskammer vorgesehen ist. Die Kupplung der Fig. 4 entspricht in ihrem grundsätzlichen Aufbau der Ausführungsform der Fig. 1. Auch bei der Kupplung der Fig. 4 ist eine Kupplungsscheibe (1˝) vorgesehen, die fest mit einer angetriebenen Nabe (31˝) verbunden ist, welche ihrerseits mit Hilfe eines Flansches (32˝) mit einem Antrieb verbunden werden kann. Es könnte, wie bei der Ausführungsform der Fig. 1, auch ein zentraler Schraubbolzen zur Befestigung der Kupplung vorgesehen sein. Bei der Bauart der Fig. 4 ist zentral auf den Deckel (34˝) des Kupplungsgehäuses (2˝) ein Bimetallstreifen (62) aufgesetzt, der auf einen koaxial in der Kupplung angeordneten Schaltstift (63) drückt, welcher wiederum einen Ventilhebel (64) gegen die Wirkung einer Rückstellfeder (65) in der dargestellten Lage fest vor die erste Zuführbohrung (5˝) drückt, die in der Trennwand (35˝) zwischen dem im Deckel (34˝) angeordneten Vorratsraum (4˝) und der Arbeitskammer (3˝) vorgesehen ist, in welcher die Kupplungsscheibe (1˝) umläuft. Das Bimetall (62) steuert daher temperaturabhängig den Zu- und Abfluß von Kupplungsflüssigkeit aus oder in die Arbeitskammer (3˝), die beim Ausführungsbeispiel auch noch mit Ringnuten (66) versehen ist, in welchen konzentrisch auf der Kupplungsscheibe (1˝) angeordnete Rippen eingreifen.

Vom Vorratsraum (4˝) aus führt jedoch eine radiale Bohrung (61) in den äußeren Rand des Deckels (34˝) herein. Diese Bohrung (61) ist außen durch eine eingepreßte Kugel (67) abgeschlossen. Von der Bohrung (61) aus führt eine zusätzliche Zuflußöffnung (55) in die Arbeitskammer (3˝) herein. Die zusätzliche Zuflußöffnung (55) ist dabei auf einem Radius (R_{Z}) angeordnet, der zum einen größer ist als der Radius (R₁) der ersten Zuflußöffnung (5˝) und zum anderen auch noch größer ist als der Radius (R_{K}) der Kupplungsscheibe (1˝). Diese zusätzliche Zuflußöffnung (55) wird in der dargestellten Lage von einem Ventil (56) abgeschlossen, das an einem Ventilhebel (58) sitzt, der beim Ausführungsbeispiel ein etwa radial nach außen abkragender Arm ist, der in einer entsprechend angeordneten Ausnehmung (57) im Kupplungsgehäuse (2˝) untergebracht ist. Der Ventilhebel (58) ist mit einem Ankerteil (59) verbunden, das beim Ausführungsbeispiel ein umlaufender Ankerring ist, der durch elastische und axial nachgiebige Stege konzentrisch zur Kupplungsachse geführt ist. Diesem Ankerring (59) ist außerhalb des Kupplungsgehäuses (2˝) eine Elektromagnetspule (60) zugeordnet, welche die Lagernabe (68) des Kupplungsgehäuses (2˝) außen ringförmig umgibt und innerhalb einer nach außen von Kühlrippen (69) des Kupplungsgehäuses (2˝) begrenzten Ausnehmung angeordnet ist. Die Elektromagnetspule (60) ist mit Hilfe eines Befestigungsringes (73) ortsfest angeordnet, so daß die Zuordnung von elektrischen Zuführleitungen (70, 71) keine Schwierigkeiten macht. Der Befestigungsring (73) ist über ein Lager (72) drehbar an der Nabe (31˝) der Flüssigkeitsreibungskupplung abgestützt. Die ortsfeste Lagerung der Elektromagnetspule (60) wird durch einen nicht gezeigten Befestigungsarm bewirkt.

Bei der Ausführungsform der Fig. 4 wird es möglich, durch Ein-und Ausschalten der Elektromagnetspule (60) den Ankerring (59) näher an die Spule (60) heranzubewegen oder nicht. Je nach Beaufschlagung der Elektromagnetspule ist daher die zusätzliche Zuführbohrung (55) geschlossen oder offen. Da diese zusätzliche Zuflußöffnung (55) in einem radialen Bereich der Kupplung angeordnet ist, der noch außerhalb des Durchmessers der Kupplungsscheibe (1˝) liegt, herrscht beim Betrieb der Kupplung vor der Zuflußöffnung (55) auch dann, wenn die Kupplung nur mit sehr niedrigen Drehzahlen (kleiner als 300 Umdrehungen pro Minute) gefahren wird, stets ein relativ hoher Druck der Kupplungsflüssigkeit. Beim Öffnen der Zuflußöffnung (55) erfolgt daher ein schneller Zufluß von Kupplungsflüssigkeit in die Arbeitskammer (3˝), so daß, wie auch bei den anderen Ausführungsformen eine sehr schnelle Drehzahlerhöhung eines Lüfters zum Beispiel im Retarderbetrieb eines Nutzfahrzeuges möglich ist. Diese Zuschaltung wird auch möglich, wenn die Kupplung mit der Leerlaufdrehzahl (kleiner oder gleich 300 Umdrehungen pro Minute) umläuft. Die Zuschaltung des Elektromagneten (60) kann über die Kühlwassertemperatur des Motors oder auch abhängig von sonstigen Parametern erfolgen.

Auch die Kupplung der Bauarten der Fig. 3 und 4, bei denen keine zusätzliche Vorratskammer vorgesehen sein muß, lassen sich daher in der gleichen Weise wie die Ausführung der Fig. 1 und 2 vorteilhaft bei mit Retardern versehenen Fahrzeugen einsetzen. Auch die vorteilhaften Wirkungen einer Zuschalttemperaturverschiebung, wie sie aus den Fig. 6 und 7 ersichtlich sind, können mit einer Kupplung gemäß Fig. 3 oder 4 erreicht werden.

Es darf zu den Fig. 6 und 7 bemerkt werden, daß nicht nur die Zuschalttemperatur von der Temperatur (y) zur Temperatur (y′) mit einer erfindungsgemäßen Ausgestaltung verschoben werden kann, sondern daß auch der zwischen den Temperaturen (x′ und x) bei Flüssigkeitsreibungskupplungen bekannter Bauart einzuhaltende Sicherheitsabschlag nicht mehr notwendig ist, weil nun, wie Fig. 7 zeigt, bei der Temperatur (x) durch Zuschaltung der Elektromagnetsteuerung schlagartig die Kupplungsdrehzahl und damit die Lüfterdrehzahl (n_{L}) erhöht werden kann. Damit ergibt sich aufgrund der erfindungsgemäßen Ausgestaltung die Möglichkeit, einen kleineren Temperaturbereich für die modulierende Regelung der Kupplung und des Lüfters auszunützen. Die Einschaltdauer der Kupplung wird daher geringer.

## Patentansprüche

1. Flüssigkeitsreibungskupplung mit einer Kupplungsscheibe (1) und einem Gehäuse (2), in dem eine Arbeitskammer (3) für die Scherflüssigkeit vorgesehen ist, die aus einer Vorratskammer (4) mit Scherflüssigkeit versorgbar ist, die über eine Zuflußöffnung (5) und einen deren freien Querschnitt steuernden Ventilhebel (6) in die Arbeitskammer (3) strömt und von dort über eine oder mehrere Rücklauföffnungen (7) in den Vorratsraum (4) zurückfließt, wobei der Ventilhebel (6) über einen Schaltstift (8) von einem Bimetall (9) temperaturabhängig betätigbar ist und die Kupplung eine zumindest teilweise modulierend regelnde Charakteristik besitzt, dadurch gekennzeichnet, daß zusätzlich eine von der temperaturabhängigen Steuerung unabhängige elektromagnetische Steuerung für den Zufluß von Scherflüssigkeit zur Arbeitskammer vorgesehen ist, die der temperaturabhängigen Steuerung überlagerbar ist.

2. Flüssigkeitsreibungskupplung nach Anspruch 1, dadurch gekennzeichnet, daß die Steuerung mit einer der von der Vorratskammer (4) abgewandten Seite der Arbeitskammer (3) zugeordneten Elektromagnetspule (10) und mit einem als Anker wirkenden zweiten Ventilhebel (11) versehen ist, der mit einer von einer zweiten Vorratskammer (12) zur Arbeitskammer (3) führenden zweiten Zuflußöffnung (13) zusammenwirkt.

3. Flüssigkeitsreibungskupplung nach Anspruch 2, dadurch gekennzeichnet, daß die zweite Vorratskammer (12) axial angrenzend an die Arbeitskammer (3) angeordnet ist.

4. Flüssigkeitsreibungskupplung nach Anspruch 2, dadurch gekennzeichnet, daß zwischen beiden Vorratskammern (4, 12) und der Arbeitskammer (3) eine oder mehrere Überströmöffnungen (14, 53) vorgesehen sind, die auf einem kleineren Radius als die jeweils zugehörigen Zuflußöffnungen (5, 13) liegen.

5. Flüssigkeitsreibungskupplung nach Anspruch 1, dadurch gekennzeichnet, daß die elektromagnetische Steuerung mit einer auf derselben Seite der Vorratskammer (4') wie das Bimetall (9') angeordneten Elektromagnetspule (10') versehen ist, die über eine Ankerscheibe (24) auf das Bimetall (9') wirkt.

6. Flüssigkeitsreibungskupplung nach Anspruch 5, dadurch gekennzeichnet, daß die Ankerscheibe (24) fest mit der Hülse (43) verbunden und axial verschiebbar, aber drehfest gelagert ist.

7. Flüssigkeitsreibungskupplung nach den Ansprüchen 5 und 6, dadurch gekennzeichnet, daß das Bimetall (9') an der Ankerscheibe (24) befestigt ist.

8. Flüssigkeitsreibungskupplung nach Anspruch 1 oder 2, dadurch gekennzeichnet, daß die Elektromagnetspule (10, 10') drehbar am Gehäuse (2) gelagert und ortsfest gehalten ist.

9. Flüssigkeitsreibungskupplung nach Anspruch 6 und 8, dadurch gekennzeichnet, daß die Ankerscheibe (24) mit einer umlaufenden Dichtung (25) gegenüber der Elektromagnetspule (10') versehen ist.

10. Flüssigkeitsreibungskupplung nach einem der Ansprüche 1 bis 9, dadurch gekennzeichnet, daß die Lagerung (27') der Elektromagnetspule (10'), die Ankerscheibe (24) mit Bimetall (9') und der Schaltstift (8') Teile einer vormontierten, auf den Deckel des Kupplungsgehäuses (2') aufsetzbaren Baueinheit (26) sind.

11. Flüssigkeitsreibungskupplung nach Anspruch 1, dadurch gekennzeichnet, daß die elektromagnetische Steuerung zum Öffnen oder Schließen einer zusätzlichen Zuflußöffnung (55) zwischen Vorratsraum (4'') und Arbeitskammer (3'') vorgesehen ist.

12. Flüssigkeitsreibungskupplung nach Anspruch 11, dadurch gekennzeichnet, daß die zusätzliche Zuflußöffnung (55) auf einen Radius (R_{Z}) angeordnet ist, der größer ist, als der Radius (R₁), auf dem die erste Zuflußöffnung (5'') angeordnet ist.

13. Flüssigkeitsreibungskupplung nach Anspruch 11 und 12, dadurch gekennzeichnet, daß der Radius (R_{Z}), auf dem die zusätzliche Zuflußöffnung (55) angeordnet ist, größer als der Radius (R_{K}) der Kupplungsscheibe (1'') ist.

14. Flüssigkeitsreibungskupplung nach Anspruch 13, dadurch gekennzeichnet, daß die zusätzliche Zuflußöffnung (55) von einem Ventil (56) verschließbar ist, das an einem in einer radialen Aussparung (57) der Arbeitskammer (3'') untergebrachtten Ventilhebel (58) sitzt, der die Kupplungsscheibe (1'') am Umfang übergreift.

15. Flüssigkeitsreibungskupplung nach Anspruch 14, dadurch gekennzeichnet, daß der Ventilhebel (58) mit einem Ankerteil (59) versehen ist, dem eine außerhalb des Gehäuses (2'') und auf der von dem Vorratsraum (4'') abgewandten Seite eine ortsfest gehaltene E-Spule (60) zugeordnet ist.

## Claims

1. A fluid friction clutch with a clutch plate (1) and a housing (2) in which there is a working chamber (3) for shearing fluid and which can be supplied with shearing fluid, storage chamber (4), the fluid flowing through a supply aperture (5) and a valve lever (6) controlling the free cross-section thereof and into the working chamber (3) and from there through one or a plurality of return apertures (7) to the storage space (4), the valve lever (6) being capable of being actuated via a switching rod (8) by a bimetallic member (9) as a function of the temperature, the clutch having an at least partially modulatingly controlling characteristic, characterised in that there is in addition, independent of the temperature-dependent control arrangement, an electromagnetic control arrangement governing the supply of shearing fluid to the working chamber, this latter control taking priority over the temperature-dependent control.

2. A fluid friction clutch according to Claim 1, characterised in that the control is provided with an electromagnetic coil (10) associated with a side of the working chamber (3) which is remote from the storage chamber (4) and with a second valve lever (11) which acts as an armature and which cooperates with a second supply aperture (13) leading from a second storage chamber (12) to the working chamber (3).

3. A fluid friction clutch according to Claim 2, characterised in that the second storage chamber (12) is disposed axially adjacent the working chamber (3).

4. A fluid friction clutch according to Claim 2, characterised in that between both storage chambers (4, 12) and the working chamber (3) there is or are one or a plurality of transfer ports (14, 53) which lie on a smaller radius than the relevant associated supply apertures (5, 13).

5. A fluid friction clutch according to Claim 1, characterised in that the electromagnetic control is provided with an electromagnetic coil (10') disposed on the same side of the storage chamber (4') as the bimetallic element (9') and which acts on this latter via an armature plate (24).

6. A fluid friction clutch according to Claim 5, characterised in that the armature plate (24) is rigidly connected to the sleeve (43) and is axially displaceable but rotationally rigid in its mounting.

7. A fluid friction clutch according to Claims 5 and 6, characterised in that the bimetallic element (9') is affixed to the armature plate (24).

8. A fluid friction clutch according to Claim 1 or 2, characterised in that the electromagnetic coil (10, 10') is rotatably mounted on the housing (2) and is rigidly supported.

9. A fluid friction clutch according to Claims 6 and 8, characterised in that the armature plate (24) is provided with an encircling seal (25) vis-a-vis the electromagnetic coil (10').

10. A fluid friction clutch according to one of Claims 1 to 6, characterised in that the mounting (27') of the electromagnetic coil (10'), the armature plate (24) with the bimetallic element (9') and the switching pin (8') are parts of a pre-assembled sub-assembly (26) which can be fitted onto the cover of the clutch housing (2').

11. A fluid friction clutch according to Claim 1, characterised in that the electromagnetic control arrangement for opening or closing an additional supply aperture (55) is provided between the storage chamber (4'') and the working chamber (3'').

12. A fluid friction clutch according to Claim 11, characterised in that the additional supply aperture (55) is disposed on a radius (R_{Z}) which is greater than the radius (R₁) on which the first supply aperture (5'') is disposed.

13. A fluid friction clutch according to Claim 11 and 12, characterised in that the radius (R_{Z}) on which the additional supply aperture (55) is disposed, is greater than the radius (R_{K}) of the clutch plate (1'').

14. A fluid friction clutch according to Claim 13, characterised in that the additional supply aperture (55) can be occluded by a valve (56) which is seated on a valve lever (58) accommodated in a radial recess (57) of the working chamber (3'') and which engages over the periphery of the clutch plate (1'').

15. A fluid friction clutch according to Claim 14, characterised in that the valve lever (58) is provided with an armature part (59) with which a rigidly supported E-coil (60) is provided which is disposed outside the housing (2'') and on the side remote from the storage chamber (4'').

## Revendications

1. Embrayage à frottement visqueux, comprenant un disque d'embrayage (1) placé dans une cage (2) dans laquelle est prévue une chambre de travail (3) du liquide à frottement visqueux qui peut être alimentée par une chambre de réserve (4) en ce liquide qui s'écoule dans la chambre de travail (3), après avoir passé par un orifice d'arrivée (5) et une soupape (6) à levier commandant la section libre de ce dernier, puis qui reflue de cette chambre de travail dans la chambre de réserve (4) en passant par un ou plusieurs orifices de reflux (7), la soupape (6) à levier étant actionnée par l'intermédiaire d'une broche de manoeuvre (8) par une bilame (9) en fonction de la température et l'embrayage ayant une caractéristique régulatrice au moins partiellement à modulation, caractérisé en ce qu'il comprend de plus une commande électromagnétique de l'arrivée de liquide à frottement visqueux à la chambre de travail, cette commande électromagnétique étant indépendante de la commande en fonction de la température et se superposant à cette commande en fonction de la température.

2. Embrayage à frottement visqueux selon la revendication 1, caractérisé en ce que la commande est équipée d'un bobinage (10) d'électro-aimant placé sur le côté de la chambre de travail (3) qui est à l'opposé de celui de la chambre de réserve (4), ainsi que d'une seconde soupape (11) à levier qui assume la fonction d'armature et qui coopère avec un second orifice d'arrivée (13) menant d'une seconde chambre de réserve (12) à la chambre de travail (3).

3. Embrayage à frottement visqueux selon la revendication 2, caractérisé en ce que la seconde chambre de réserve (12) est juxtaposée axialement à la chambre de travail (3).

4. Embrayage à frottement visqueux selon la revendication 2, caractérisé en ce qu'un ou plusieurs orifices de décharge (14, 53) prévus entre les deux chambres de réserve (4, 12) et la chambre de travail (3) sont situés sur un rayon plus petit que celui des orifices correspondants d'arrivée (5, 13).

5. Embrayage à frottement visqueux selon la revendication 1, caractérisé en ce que la commande électromagnétique est équipée d'un bobinage (10') d'électro-aimant qui est disposé sur le même côté de la chambre de réserve (4') que la bilame (9') et qui agit sur la bilame (9') au moyen d'une armature discoïdale (24).

6. Embrayage à frottement visqueux selon la revendication 5, caractérisé en ce que l'armature discoïdale (24) est solidaire du manchon (43) et elle est montée mobile axialement, mais immobile en rotation.

7. Embrayage à frottement visqueux selon les revendications 5 et 6, caractérisé en ce que la bilame (9') est fixée à l'armature discoïdale (24).

8. Embrayage à frottement visqueux selon la revendication 1 ou 2, caractérisé en ce que le bobinage d'électro-aimant (10, 10') est monté rotatif sur la cage (2) et tenu en position fixe.

9. Embrayage à frottement visqueux selon les revendications 6 et 8, caractérisé en ce que l'armature discoïdale (24) est équipée d'une garniture tournante (25) d'étanchéité vis à vis du bobinage d'électro-aimant (10').

10. Embrayage à frottement visqueux selon l'une des revendications 1 à 9, caractérisé en ce que le support (27') du bobinage d'électro-aimant (10'), l'armature discoïdale (24) avec la bilame (9') et la broche de manoeuvre (8') font partie d'un module (26) pré-assemblé et se montant sur le couvercle de la cage (2').

11. Embrayage à frottement visqueux selon la revendication 1, caractérisé en ce que la commande électromagnétique est prévue pour l'ouverture ou la fermeture d'un orifice supplémentaire d'arrivée (55) situé entre la chambre de réserve (4") et la chambre de travail (3").

12. Embrayage à frottement visqueux selon la revendication 11, caractérisé en ce que l'orifice supplémentaire d'arrivée (55) est disposé sur un rayon (R_{Z}) qui est plus grand que le rayon (R₁) sur lequel est placé le premier orifice d'arrivée (5").

13. Embrayage à frottement visqueux selon les revendication 11 et 12, caractérisé en ce que le rayon (R_{Z}) sur lequel est situé l'orifice supplémentaire d'arrivée (55) est plus grand que le rayon (R_{K}) du disque d'embrayage (1").

14. Embrayage à frottement visqueux selon la revendication 13, caractérisé en ce que l'orifice supplémentaire d'arrivée (55) est obturable par une soupape (56) qui est placée sur un levier (58) logé dans une cavité radiale (57) de la chambre de travail (3") et chevauchant la circonférence du disque d'embrayage (1").

15. Embrayage à frottement visqueux selon la revendication 14, caractérisé en ce que le levier (58) de soupape est équipé d'un élément d'armature (59) auquel est associé un bobinage d'électro-aimant (60) monté en position fixe à l'extérieur de la cage (2") et sur le côté tourné à l'opposé de la chambre de réserve (4").
